# EUROPEAN PATENT APPLICATION

(11) **EP 3 876 523 A1**
(43) Date of publication of application: **08.09.2021**
(21) Application number: 20161490.6
(22) Date of filing: 06.03.2020
(51) Int. Cl.: H04N 5/3745, H04N 5/369, H04N 5/357

(54) **SHARED-PIXEL COMPARATOR**

(71) Applicant: Gpixel NV, 2018 Antwerpen (BE)
(72) Inventor: BOGAERTS, Jan, 2860 Sint-Katelijne-Waver (BE); WOLFS, Bram, 3221 Nieuwrode (BE)
(74) Representative: DenK iP bv

(57) **Abstract**

A shared-pixel circuit (30, 50) for use in an image sensor, an image sensor comprising the same, and a method for digitizing readout signals of a pixel cell in such image sensor are disclosed. The shared-pixel circuit comprises at least a first pixel cell (31, 51) and a second pixel cell (32, 52), and pixel cells each comprise a photosensitive element (PPD1, PPD2), a charge storage area (FD1, FD2) operatively connectable to the photosensitive element, and an amplification transistor (SF1, SF2). The amplification transistors of the first and second pixel cell are arranged to form an input pair of a differential amplifier configured for receiving one of a first and second sensing signal, representative of the charge stored in the charge storage area of the first and the second pixel cell respectively, and an analog signal having a ramped signal portion, as a first input signal, receiving the other one of said first and second sensing signal and said analog signal as a second input signal, comparing the first input signal to the second input signal, and generating a bi-stable output signal based on said comparing of said input signals.

## Description

### Field of the invention

The present invention relates to the field of imaging devices and solid-state image sensors, and in particular to electronic readout circuitry for pixels of such sensors.

### Background of the invention

Many of the existing active-pixel solid-state image sensors, for instance CMOS image sensors, rely on analog circuitry to amplify a charge signal of photogenerated carriers collected by each sensor pixel. The source-follower configuration is widely used to achieve this and is part of the electronic circuity associated with and integrated into each functional pixel. The amplified charge signal is then applied to a connected column bus of the pixel as an analog readout current or analog readout voltage signal suitable for a subsequent digitization step. In the case of image sensors that are operated with electronic circuitry on column-level, the analog-to-digital conversion for the plurality of readout signals, present on each column bus of the image sensor, is performed by a corresponding plurality of analog-to-digital converters (ADC) connected to ends of the respective column busses. Various ADC circuit implementations are known, amongst which the frequently used single-sloped ADC, which is comparing the readout signal received at one input thereof to a monotonically increasing signal ramp received at another input of the ADC to determine a time of crossing of the two compared signals.

Attempts have been made to bring the ADC closer to the pixel and provide each sensor pixel with an independent built-in ADC to obtain what is known as a digital pixel sensor, i.e. read out signals from each pixel are already converted into the digital domain.

In M. Sakakibara et al., "A back-illuminated global-shutter CMOS image sensor with pixel-parallel 14b subthreshold ADC", 2018 IEEE International Solid-State Circuits Conference (ISSCC), San Francisco, CA, 2018, pp. 80-82, Sakakibara (Sony) presented results on a BSI-GS (backside-illuminated global shutter) CMOS imager with pixel-parallel 14 bit ADC. To achieve a global shutter function of a CMOS sensor in the digital domain, one ADC per pixel is required. A stacked image sensor with a single ADC per pixel has been suggested, in which each single pixel ADC is a single-slope ADC with a comparator and a latch. The design of the pixel is such that an in-pixel buffer transistor is already part of the comparator, which makes the structure very compact, but also requires two Cu-Cu contacts between the top and the bottom layer of each pixel.

US10142575 also discloses an image sensor in which the first part of the comparator is implemented in the pixel itself.

### Summary of the invention

It is an object of embodiments of the present invention to provide a method and device for digitizing readout signals of a pixel cell.

The above objective is accomplished by a method and device according to the present invention.

In a first aspect, the present invention relates to a shared-pixel circuit for use in an image sensor. The shared-pixel circuit comprises at least a first pixel cell and a second pixel cell, wherein each one of the first and second pixel cell includes a photosensitive element for converting incoming photons into charge, a charge storage area operatively connectable to the photosensitive element and adapted for receiving and storing the charge accumulated by the photosensitive element, and an amplification transistor adapted for sensing charges present on the charge storage area. Stored charges are typically photoelectrons. Furthermore, the amplification transistors of the first and second pixel cell are arranged to form an input pair of a differential amplifier. The differential amplifier is configured for receiving only one of a first sensing signal, representative of the amount of charge stored in the charge storage area of the first pixel cell, and an analog signal having a ramped signal portion as a first input signal. In addition thereto, the differential amplifier is configured for receiving a second sensing signal, representative of the amount of charge stored in the charge storage area of the second pixel cell, as a second input signal if a received first input signal corresponds to said analog signal, and for receiving said analog signal as a second input signal if a received first input signal corresponds to said first sensing signal. Moreover, the differential amplifier is configured for comparing received first and second input signals to each other signal, and for generating a bi-stable output signal, based on said comparing of said received input signals.

Comparing of the first and second input signal may include determining whether a signal level of the received first input signal currently lies above or below a signal level of the received second input signal. A bi-stable output signal may be defined in terms of a first output signal which represents a logical low, and a second output signal which represents a logical high value, or vice versa. A generated bi-stable output signal is thus a digital output signal. Providing a bi-stable output signal has the advantage that such an output signal is more robust with respect to interfering noise, for instance interference noise captured during signal propagation on column busses of an image sensor comprising the shared-pixel circuit, to which the output signals are applicable. Additionally, a bi-stable output signal can be directly used in digital processing circuitry and less stringent conditions for the settling behavior of the bi-stable output signal apply as compared to the settling behavior of a continuously variable output signal in the analog domain.

In embodiments of the invention, the charge storage area may correspond to the capacitive area of a capacitor, the intrinsic capacitive area of a floating diffusion node, or even the capacitive area associated with a parasitic capacitance, for instance a parasitic capacitance formed by doped source/drain regions or by terminals of the amplification transistor or a charge transfer transistor for transferring photogenerated charges from the photosensitive element to the charge storage area.

In embodiments of the invention, the amplification transistors may be provided as three-terminal devices, comprising a control terminal and a first and second main terminal, wherein a control signal received at the control terminal controls the flow of charge carriers between the first and second main terminal. Preferably, the amplification transistors are implemented as field-effect transistors having a gate terminal as control terminal, a source terminal as first main terminal and a drain terminal as second main terminal. For these embodiments, the first and second input signals to the differential amplifier are received at the control terminals of the respective amplification transistors of which the differential amplifier is composed.

In embodiments of the invention, the amplification transistors of the shared-pixel circuit may be based on, reuse or adapt the source follower transistors of a conventional pixel cell, for instance a conventional 4T (four transistor) pixel cell. This is of advantage since pixel cells of many known image sensors use the source follower transistor configuration for sensing of photocharges; therefore, only minimal modification of existing pixel cell designs are needed. No further transistors need to be added in those embodiments, which saves silicon area.

In embodiments of the invention, the shared-pixel circuit may also comprise a load pair, wherein each load of the load pair is in series connection with, or serially connectable to, a respective one of the amplification transistors of the first and second pixel cell. The loads of the load pair are preferably in series connection with, or serially connectable to, the second main terminals, e.g. the drain terminals, of the respective amplification transistor of the first and second pixel cell. The loads of the load pair may form part of the first and/or the second pixel cell, or may be located outside the first and second pixel cell, for instance outside, e.g. on the periphery of, an array of pixel cells forming part of an image sensor. Each load of the load pair may be implemented as a resistor, a voltage-controlled resistance such as a MOS transistor, or a combination thereof.

In a shared-pixel circuit according embodiments of the invention, the differential amplifier may be composed of two branches, wherein each branch comprises a respective one of the amplification transistors of the first and second pixel cell. The branched structure of the differential amplifier is advantageous since electrical components that are already present in each one of the first and second pixel cell can be used to implement the differential amplifier merely by addition of suitable interconnections. Interconnections are more easily added to existing pixel cell designs and require only minor modifications. No additional area-intensive and power-consuming electrical components have to be added to the pixel cells of the shared-pixel circuit.

In embodiments of the invention comprising the two-branched differential amplifier, a load pair may be provided such that each load of the load pair is in series connection with, or serially connectable to, a respective one of the amplification transistors in each branch. The loads of the load pair are preferably in series connection with, or serially connectable to, the second main terminals, e.g. the drain terminals, of the respective amplification transistor in each branch. Providing the load pair is advantageous because it allows for a more precise control of the generated bi-stable output levels, for instance by more precisely controlling a voltage drop for establishing the lower one of the two possible generated output signals. The loads of the load pair may form part of the first and/or the second pixel cell, or may be located outside the first and second pixel cell. For instance, the loads of the load pair may be located outside an array of pixel cells of an image sensor which comprises the shared-pixel circuit. This allows for the design of more compact and energy-efficient pixel cells.

According to embodiments of the invention, the loads of the load pair may be shared between a plurality of shared-pixel circuits. For instance, the loads of the load pair may be shared between a plurality of shared-pixel circuits arranged in a same column of an arrayed image sensor comprising a plurality of shared-pixel circuits according to embodiments of the invention. Moreover, one load pair may be shared between more than a single column of pixel cells, for instance between two or more adjacent columns. This may be achieved by proving one load pair for each column of pixel cells, which load pair is operatively connectable to column bus lines provided for each such column of pixel cells.

In accordance with embodiments of the invention, these column bus lines may be implemented as a dual column bus line with first pixel cells of each shared-pixel circuit in the column being connectable to a first column bus line of the dual column bus and second pixel cells of each shared-pixel circuit in the column being connectable to a second column bus line of the dual column bus. For instance, the second main terminals, e.g. drain terminals, of the amplification transistor of the first pixel cells of each shared-pixel circuit in the column may be connected to a first column bus line of the dual column bus, and the second main terminals, e.g. drain terminals, of the amplification transistor of the second pixel cells of each shared-pixel circuit in the column may be connected to a second column bus line of the dual column bus. Therefore, the dual column bus can be implemented as a differential column bus. It is an advantage of differential busses that, with proper routing, the coupling to neighboring busses can be cancelled. It is a further advantage of differential busses that common mode noise can be cancelled in general.

In alternative embodiments of the invention, the column bus lines may be implemented as a single column bus line instead. In such alternative embodiments, either the first pixel cells or the second pixel cells of each shared-pixel circuit belonging to a same column are connectable to the single column bus line. For instance, the second main terminals, e.g. drain terminals, of the amplification transistor of either the first pixel cells or the second pixel cells of each shared-pixel circuit in the column may be connected to the single column bus line. Choosing a single column bus line implies that transitions in the bi-stable output signals generated by the differential amplifier depend on which one of the first and second pixel cell is currently read out. If, for example, the first sensing signal is received as an input by the differential amplifier of the shared-pixel circuit, a generated bi-stable output signal may transition from a logical high level to a logical low level during comparison with the ramp of the analog signal. In contrast thereto, a generated bi-stable output signal may transition from a logical low level to a logical high level during comparison with the ramp of the analog signal if the second sensing signal is received as an input by the differential amplifier. Although a single column bus line cannot be used to obtain a differential column bus, an advantage of using single column bus lines is that less column bus lines are required in the final image sensor, with the possibility of obtaining cheaper and denser image sensors.

In embodiments of the invention, each pixel cell of the shared-pixel circuit may further comprise a selection transistor for selecting the pixel cell to dynamically form part of the differential amplifier with comparator functionality.

In embodiments of the invention, first main terminals, e.g. source terminals, of the amplification transistors of the first and second pixel cell may be coupled to a common potential node of the differential amplifier. This may be achieved by providing suitable connection means, for instance a (wire) connector, for directly connecting the first main terminals, e.g. the source terminals, of each amplification transistor of the shared-pixel circuit to the common potential node. As a result thereof, the first main terminals, e.g. the source terminals, of each amplification transistor of the shared-pixel circuit are also connected to each other.

Alternatively, the first main terminals of the amplification transistors of the first and second pixel cell may be indirectly coupled to the common potential node, for instance via respective selection transistors of the first and second pixel cell. The selection transistors of the first and second pixel cell are arranged in respective branches of the differential amplifier, and main terminals of each selection transistor are connected between the first main terminal, e.g. the source terminal, of the amplification transistor in the corresponding branch and the common potential node. In this case, a suitable connection means, for instance a (wire) connector, may directly connect the first main terminals, e.g. the source terminals, of each selection transistor to the common potential node. The common potential node may be configured for receiving a bias current. This bias current may be provided by a current source which is external to the pixel cells, for instance a current source associated with a column of pixel cells in an arrayed image sensor, or may be provided by a current source which is included into the shared-pixel circuit.

According to embodiments of the invention, the shared-pixel circuit may also include at least one transfer transistor arranged between the photosensitive element and the charge storage area of at least one of the first and second pixel cell. The at least one transfer transistor is configured for transferring the accumulated charge from the photosensitive element to the charge storage area when activated.

According to embodiments of the invention, the shared-pixel circuit may include one or more further pixel cells, for instance a third pixel cell. The amplification transistors of any two pixel cells of the shared-pixel circuit may be arranged to form an input pair of a differential amplifier. For instance, the amplification transistors of the first and second pixel cell form an input pair to a first differential amplifier, the amplification transistors of the first and third pixel cell form an input pair to a second differential amplifier, the amplification transistors of the second and third pixel cell form an input pair to a third differential amplifier, and so forth. The differential amplifier associated with any two pixel cells is configured for receiving only one of a first sensing signal, representative of an amount of charge stored in the charge storage area of a first one of the two pixel cells associated with the differential amplifier, and an analog signal having a ramped signal portion, as a first input signal. It is also configured for receiving a second sensing signal, representative of an amount of charge stored in the charge storage area of a second one of the two pixel cells associated with the differential amplifier, as second input signal if a received first input signal corresponds to said analog signal, and for receiving said analog signal as a second input signal if a received first input signal corresponds to said first sensing signal. Furthermore, the differential amplifier is configured for comparing the first input signal to the second input signal, and for generating a bi-stable output signal based on said comparing of said input signals.

According to embodiments of the invention, the first and/or second pixel cell of the shared-pixel circuit may be configured to share their charge storage area with one or more different, e.g. adjacent, pixel cells. Further photosensitive elements corresponding to the one or more different pixel cells, with which the charge storage area is shared, may be coupled to the charge storage area of the first and/or second pixel cell via individually addressable transfer transistors. This has the further advantage of enabling charge domain binning between a plurality of pixel cells.

According to embodiments of the invention, the shared-pixel circuit may also include output connectors for applying the generated output of the differential amplifier to a single column bus or dual column bus of an image sensor.

According to embodiments of the invention, at least one of the first and second pixel cell of the shared-pixel circuit may comprise a gain selection means for selecting between a high gain, e.g. analog gain, and a low gain, e.g. analog gain, for instance a capacitive element for selective gain switching, e.g. a capacitor. This capacitive element may be selectively connected or disconnected from the charge storage area of the at least one pixel cell to selectively increase or decrease a storage capacitance for the accumulated photocharge after transfer from the photosensitive element.

In a further aspect, the present invention relates to an image sensor comprising a substrate and at least one shared-pixel circuit according to embodiments of the first aspect, formed on or in the substrate.

In preferred embodiment of the invention, the image sensor comprises a plurality of pixel cells arranged into pairs of pixel cells to form a plurality of shared-pixel circuits. Pixel cells of the image sensor may be arranged in rows and columns of an array. A pair of pixel cells, which form one of the shared-pixel circuits, may correspond to two adjacent pixel cells in a same column of the array. Alternatively, a pair of pixel cells, which form one of the shared-pixel circuits, may correspond to two pixel cells in a same column of the array separated by one or more pixel cells of the same column.

According to embodiments of the invention, the image sensor may include at least one dual column bus for receiving and transmitting digital outputs generated by the differential amplifier of at least one shared-pixel circuit.

In embodiments of the invention, the image sensor may be a CMOS imager. The image sensor may be operated in a global shutter mode. Operating the image sensor in the global shutter mode has the advantage of avoiding moving image artefacts.

In embodiments of the invention, the image sensor may comprise a color mask or color filter array (e.g. Bayer filter array) overlaying the photosensitive elements of the pixel cells such that pixel cells constituting a shared-pixel circuit are associated with a same color of the color mask or filter array, or are each associated with a different color of the color mask or filter array. This has the advantage of providing an image sensor the pixel cells of which are color sensitive, i.e. an image sensor for capturing color images instead of monochrome images. Additionally, or alternatively, the image sensor may comprise an array of microlenses overlaying the photosensitive elements of the pixel cells to improve the light collection efficiency of the image sensor.

In embodiments of the invention, the image sensor may comprise an analog-to-digital converter associated with each pixel cell column of the image sensor, wherein a comparator unit of the analog-to-digital converter is provided by the shared-pixel circuits of that column. Alternatively, an analog-to-digital converter is associated with each shared-pixel circuit of the image sensor, wherein a comparator unit of the analog-to-digital converter is provided by the shared-pixel circuit. The analog-to-digital converter associated with each pixel cell or pixel cell column may comprise a ramp signal generating unit, a counter, and a latch. Moreover, an analog-to-digital converter may be associated with two or more pixel cell column of the image sensor in accordance with particular embodiments of the invention.

In embodiments of the invention, the image sensor may be provided as a vertically stacked image sensor, comprising a pixel substrate and a logic substrate. The pixel substrate is connected to the logic substrate, e.g. via through silicon vias or copper interconnects. According to such embodiments, the at least one shared-pixel circuit is formed in the pixel substrate and signal processing means, for further processing of generated bi-stable output signals of the at least one shared-pixel circuit, are formed on the logic substrate. For instance, a ramp signal generating unit, a counter, and a latch, associated with each pixel cell or pixel cell column in the pixel substrate, may be provided on the logic substrate. This has the advantage that the image sensor can be operated in a pixel-parallel mode, in which output signals of a plurality of shared-pixel circuits are received and further processed in parallel within the logic substrate.

In yet a further aspect, the present invention is directed to a method of digitizing readout signals of a pixel cell in an image sensor comprising a plurality of pixel cells. In a first step of the method, a photogenerated charge accumulated by the pixel cell is shifted to a charge storage area of the pixel cell, to generate a first sensing signal that is indicative of the amount of charge accumulated by the pixel cell during exposure. Next, a differential pair is formed by coupling a main terminal, e.g. source terminal, of an amplification transistor of the pixel cell to a corresponding main terminal, e.g. source terminal, of an amplification transistor of a further pixel cell of the image sensor. Then the first sensing signal is supplied to a control terminal of the amplification transistor of the pixel cell, and an analog signal is supplied to a control terminal of an amplification transistor of the further pixel cell, wherein the analog signal comprises a ramped signal portion. In a further step, a moment in time is recorded, at which a transition in a bi-stable output signal of the differential pair occurs as a result of a level of the supplied analog signal crossing a level of the supplied first sensing signal. In embodiments of the invention, the analog-to-digital conversion may thus be based on a single-slope conversion method.

Optionally, the method may comprise the following steps for digitizing readout signals of the further pixel cell in the image sensor. In one step, a photogenerated charge accumulated by the further pixel cell is shifted to a charge storage area of the further pixel cell, to generate a second sensing signal that is indicative of the amount of charge accumulated by the further pixel cell during exposure. Then the second sensing signal is supplied to the control terminal of the amplification transistor of the further pixel cell, and an analog signal is supplied to the control terminal of the amplification transistor of the pixel cell, wherein the analog signal comprises a ramped signal portion. Next, a moment in time is recorded, at which a transition in the bi-stable output signal of the differential pair occurs as a result of the level of the supplied analog signal crossing the level of the supplied second sensing signal.

In embodiments of the invention, the method may further comprise steps for acquiring a reference signal for the pixel cell, for performing correlated double sampling. These steps may comprise clearing the charge in the charge storage area of the pixel cell to generate a first reference signal for correlated double sampling, supplying the first reference signal to the control terminal of the amplification transistor of the pixel cell, supplying an analog signal with a ramped signal portion to the control terminal of the amplification transistor of the further pixel cell, and recording a moment in time at which a transition in a bi-stable output signal of the differential pair occurs as a result of a level of the supplied analog signal crossing a level of the supplied first reference signal.

Furthermore, a time interval lapsed between a start time and the recorded moment in time in respect of one of the transitions in the bi-stable output signal of the differential pair may be measured. In embodiments of the invention, measuring the time interval may comprise counting a number of increments in the ramped signal portion. The start time is the moment in time at which the ramped signal portion is supplied to the control terminal of one of the amplification transistors of the differential pair. The measured time interval may be converted to a bit value, and optionally be stored in a storage element of the image sensor.

In embodiments of the invention, the method may further comprise the step of transmitting the bi-stable output signal of the differential pair on a single column bus or a dual column bus of the image sensor.

Particular and preferred aspects of the invention are set out in the accompanying independent and dependent claims. Features from the dependent claims may be combined with features of the independent claims and with features of other dependent claims as appropriate and not merely as explicitly set out in the claims.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

### Brief description of the drawings

The invention will now be described further, by way of example, with reference to the accompanying drawings, in which:
FIG 1 shows a 4T pixel architecture as known in the prior art.
FIG 2 shows a known electronic circuit with comparator functionality.
FIG 3 shows a shared-pixel circuit based on two 4T single pixel cells, in accordance with embodiments of the present invention.
FIG 4 is a timing diagram illustrating the control sequences to be applied to the shared-pixel circuit of FIG 3 during readout.
FIG 5 shows a further shared-pixel circuit based on two 7T single pixel cells, in accordance with embodiments of the present invention.
FIG 6 shows a shared-pixel circuit based on four 4T single pixel cells organized into two groupings of two resource-sharing pixel cells each, in accordance with an embodiment of the present invention.
FIG 7 shows a shared-pixel circuit based on two 5T single pixel cells comprising gain selection means, in accordance with embodiments of the present invention.
FIG 8 shows a shared-pixel circuit based on two 3T single pixel cells, in accordance with embodiments of the present invention.
FIG 9 is a timing diagram illustrating the control sequences to be applied to, as well as input signals to the differential amplifier formed by, the shared-pixel circuit of FIG 8 during readout.
FIG 10 shows an image sensor comprising a plurality of shared-pixel circuits according to the embodiment of FIG 3.

The drawings are only schematic and are non-limiting. In the drawings, the size of some of the elements may be exaggerated and not drawn on scale for illustrative purposes. The dimensions and the relative dimensions do not necessarily correspond to actual reductions to practice of the invention.

Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but the invention is not limited thereto but only by the claims.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art.

In the description provided herein, numerous specific details are set forth. However, it is understood that embodiments of the invention may be practiced without these specific details. In other instances, well-known methods, structures and techniques have not been shown in detail in order not to obscure an understanding of this description.

When, in the present disclosure, reference is made to a "pixel cell", the smallest addressable subdivision in an imaging device is meant. A "pixel cell" further relates to a predesigned combination of circuit elements in an integrated circuit imaging device, which have a specific layout and interconnection terminals, for implementing a position-dependent conversion of an image into electric charge packets that can be transferred as the electrical representation of the image. This does not exclude the possibility of having some of the circuit elements of a particular pixel cell in common, i.e. shared, with another, different pixel cell. A plurality of pixel cells are logically organized in rows and columns in an array forming part of the imaging device. In the context of the present invention, a "pixel cell" comprises at least a photosensitive element, a charge storage area and an amplification transistor.

When, in the present disclosure, reference is made to a "shared-pixel circuit", what is meant is that two individual pixel cells are combined and interconnected in a synergetic way such that a new circuit functionality is provided, which would not be obtained if only either one of the two individual pixel cells were used. In the present invention, this new functionality is that of a comparator. Further, the two combined and interconnected pixel cells contribute with their respective cell components, e.g. transistors, to realize the new functionality. A reference to a "shared-pixel circuit" shall not be understood to designate two or more photosensitive elements, e.g. photodiodes, which are connected to a same source follower, i.e. photodiodes sharing a same source follower.

The terms "horizontal" and "vertical" (related to the terms "row" and "column" respectively) may be used to provide a coordinate system and for ease of explanation only. They do not need to, but may, refer to an actual physical direction of the device. Furthermore, the terms "column" and "row" are used to describe sets of array elements which are linked together. The linking can be in the form of a Cartesian array of rows and columns; however, the present invention is not limited thereto. Also, non-Cartesian arrays may be constructed and are included within the scope of the invention. For example, the rows may be circles and the columns radii of these circles and the circles and radii are described in this invention as "logically organised" rows and columns. Accordingly the terms "row" and "column" should be interpreted widely.

Embodiments of the invention may be obtained by carrying out only minor modifications to existing pixel circuits in state-of-the-art solid-state image sensors, e.g. by changing, without adding new hardware elements, the input and output connections of the existing hardware elements in portions of the pixel circuits in CMOS image sensors, and by providing new methods of performing the signal readout for each pixel.

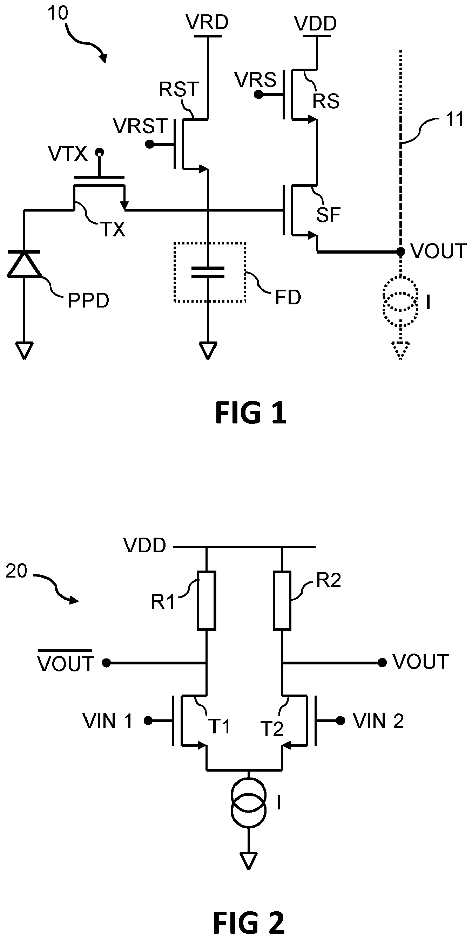

A well-known active pixel circuit 10 for arrayed image sensors, e.g. CMOS image sensors comprising an active-pixel matrix, is shown in FIG 1. The illustrated pixel circuit 10 is of the 4T (4 transistor) cell-type and includes the following transistors: a transfer transistor TX, a reset transistor RST, a selection transistor RS, and an amplification transistor SF. A photosensitive element PPD of the pixel circuit 10, e.g. a pinned photodiode, is adapted for generating and collecting photoelectric charges when illuminated during exposure, and the photosensitive element PPD is coupled to a charge storage area, e.g. capacitive element FD, e.g. a floating diffusion node, via the transfer transistor TX. After the exposure time has lapsed (integration time), the photogenerated total charge collected by the photosensitive element PPD is transferred (by suitable actuation of the transfer transistor TX) to the charge storage area, e.g. capacitive element FD, where it is received and temporarily stored until being read out. The charge storage area, e.g. capacitive element FD, thus provides an in-pixel charge storage area and also acts as a sense node. The moment the collected total charge is removed from the photosensitive element PPD, by charge transfer to the charge storage area, e.g. capacitive element FD, is determined by a control signal "VTX" applied to the gate of the transfer transistor TX. The charge storage area, e.g. capacitive element FD, is connected to a gate terminal of the amplification transistor SF; the amplification transistor thus senses the magnitude of the voltage signal caused by the charge transferred onto the capacitance of the element FD for temporary storage. Being configured as a source-follower FET, the amplification transistor SF functions as a voltage buffer so that substantially no charge is removed from the charge storage area, e.g. capacitive element FD, during sensing. The selection transistor RS is connected between a power supply line VDD and a main terminal, drain terminal in the embodiment illustrated, of the amplification transistor SF. When the selection transistor is switched on by a suitable selection signal "VRS" (e.g. row-select signal) received at its gate terminal, the drain terminal of the amplification transistor SF is coupled to the power supply line and a bias current is allowed to flow through the amplification transistor SF and towards a column bus. The bias current required for biasing the amplification transistor SF is generated outside the pixel circuit 10, e.g. by the external biasing current source "I" on the column bus 11. As a result of the above, a voltage signal "VOUT" representative of the accumulated charge (photogenerated during integration) is generated at an output terminal (e.g. source) of the amplification transistor SF and is transferred onto the column bus 11 to which the pixel circuit 10 is connected. This transferred voltage signal is subsequently read out by readout circuitry located outside the pixel array (not shown), e.g. by a readout block connected to the column bus and comprising a pre-amplifier stage and an analog-to-digital A/D conversion stage. In an image sensor a plurality of identical active pixel circuits 10 are provided in each pixel column of the image sensor and connected to the same column bus. A single analog-to-digital converter circuit (ADC) is thus arranged at the end of the column bus and shared by all the pixel circuits connected to that same column bus. Alternatively, a single ADC may be configured to serve multiple column busses, e.g. multiple columns of pixel circuits.

The reset transistor RST only opens when a reset signal "VRST" is received at its gate terminal and stays closed otherwise. Opening of the reset transistor RST effectively couples the charge storage area, e.g. capacitive element FD, to a further power supply line VRD and resets the charge storage area, e.g. capacitive element FD, to a predetermined reset voltage level. As a result, the temporarily stored charge in the charge storage area, e.g. capacitive element FD, if any, is cleared. Thereafter, the reset transistor is switched off again. Typically, the charge storage area, e.g. capacitive element FD, is only reset to the reset voltage level after the sensing of the stored charge has been completed, e.g. the voltage level to be sensed on the corresponding column bus has been successfully digitized or prepared for digitization, whereby new charge is allowed to be transferred to and stored in the charge storage area, e.g. capacitive element FD. Herein, preparing a voltage signal on a column bus to be sensed for digitization, may include storing this signal in the analog domain on a capacitive element, e.g. on a capacitor, before subjecting the stored signal to the quantization process performed by an ADC. In correlated double sampling (CDS) techniques, the capacitive element FD is being read out twice, a first time just before receiving the collected charge from the photosensitive element PPD via the transfer transistor TX, and a second time after the charge transferring step has been carried out. This removes the detrimental influence of residual or thermal charges, present on the capacitive element FD before arrival of the transferred photogenerated charge from the photosensitive element PPD, on the sensed voltage signals and, ultimately, on the obtained readout signals for each individual pixel. In consequence, pixel-related noise reduction or removal (e.g. in respect of kTC noise, 1/f noise of the source follower, fixed pattern noise, etc.) can be achieved by the applying CDS techniques.

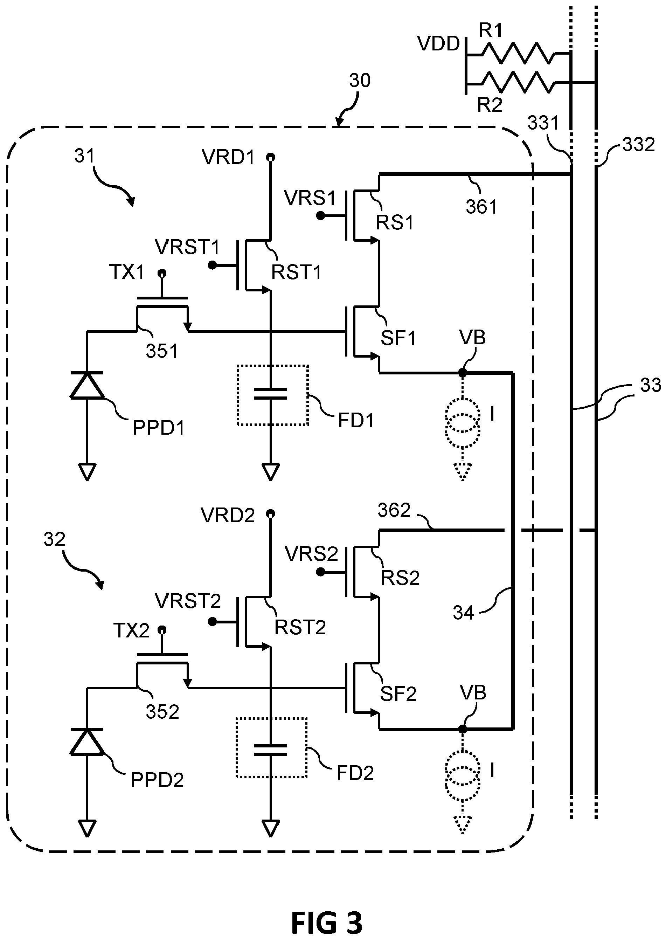

An embodiment of the present invention is now explained with reference to FIG 2 and FIG 3. It is desirable to provide a comparator as part of an ADC within the active-pixel matrix, rather than at the periphery or off-chip, to obtain a digital (e.g. two-valued) representation of the sensed voltage signals from each sensor pixel as early as possible. This enables sending and receiving of digital signals instead of analog signals on the column bus lines of the sensor, and has numerous benefits in terms of signal robustness against disturbances and the addition of noise. Moreover, the settling behavior of digital signals is often better and more easily controlled as compared to the settling behavior of analog signals, and hence is less of an issue. The reason therefore is that ringing artefacts in analog signals are required to fade completely to not introduce signal errors in subsequent circuitry with analog input, connected to the bus lines, whereas for digital signals ringing artefacts are less critical, because once a ringing signal has exceeded a threshold, the digit represented by the digital signal is already well-defined. It is further beneficial to use as much as possible the electronic circuitry already present in the sensor pixels when implementing the comparator circuit, in order to save semiconductor area. Limiting the semiconductor area used for readout circuitry allows to shrink the pixel size or allows to maximize the part for the photodiode, the latter being usually better for electro-optical performance.

A circuit 20 that is suitable for this purpose is depicted in FIG 2. This circuit 20 is configured for receiving and comparing two signals, "VIN 1" and "VIN 2", applicable to a first input terminal and a second input terminal of the circuit 20, e.g. to the gate terminals of a first transistor T1 and a second transistor T2 respectively. In the description, the input signal and the input terminal of the circuit where it is received will both be referred to by the same reference sign, e.g. by VIN 1 or VIN 2, knowing that the skilled person is able to understand, in the given context, to which entity reference was made. The circuit 20 is configured as a differential pair composed of two branches, each branch comprising a transistor (T1, T2) and a load (R1, R2) connected in series to a current-receiving terminal (e.g. drain terminal) of the transistor. The two branches are connected together at the current-supplying terminals (e.g. source terminals) of their respective transistors T1, T2 and have a common connection to a current source "I". The load terminals not connected to the transistors in each branch are coupled to a common power supply line VDD.

If a difference between the two input signals (e.g. VIN 1 - VIN 2) is zero, i.e. if VIN 1 = VIN 2, the current supplied by the current source "I" is exactly split between the two branches and half of the source current (e.g. I/2) is flowing through each branch. This ideal case, however, is unstable due to perturbations in the two input signals and is rarely met. As soon as a small difference between the two input signals develops, e.g. as soon as VIN 1 > VIN2 or VIN 1 < VIN 2, one of the two branches starts dominating the other one and transports almost the entire source current I, the other branch being starved of current. As a result, the circuit 20 provides an output signal "VOUT" which is bi-stable and which switches between a HIGH state and a LOW state, depending on whether the second input signal received is greater than the first input signal received (e.g. VIN 2 > VIN 1), respectively smaller than the first input signal received (e.g. VIN 1 > VIN 2). A complementary output signal *V̅O̅U̅T̅* is provided by the circuit 20, which is bi-stable and switches as a complement of the first output signal VOUT, e.g. the complementary output signal switches between a LOW state and a HIGH state, depending on whether the second input signal received is greater than the first input signal received (e.g. VIN 2 > VIN 1), respectively smaller than the first input signal received (e.g. VIN 1 > VIN 2). The output signal VOUT and its complement *V̅O̅U̅T̅* can be combined into a differential output signal pair. By way of example, if VIN 1 > VIN 2, the source current "I" substantially entirely flows through the left branch (R1-T1) and substantially no current flows through the right branch (R2-T2). Hence, VOUT approximately equals VDD in this case and a HIGH value is ascertained at the output (and a LOW value is ascertained for the complementary output). Likewise, in the case of VIN 1 < VIN 2, the source current "I" substantially entirely flows through the right branch (R2-T2) and substantially no current flows through the left branch (R1-T1). Hence, VOUT approximately equals VDD-R2*I in this case and a LOW value is ascertained at the output (and a HIGH value is ascertained for the complementary output). Typically, the two branches (left and right) of the circuit 20 are conceived as symmetrical in their components, e.g. the resistance of load R1 is substantially equal to the resistance of load R2 and the transistors T1 and T2 have substantially identical properties.

From the foregoing description it becomes evident that the circuit 20 is capable of discriminating between input conditions for which the first input signal is greater, respectively smaller than the second input signal. A transition of the output signal VOUT, e.g. from LOW to HIGH or vice versa, occurs whenever the input level of the first signal VIN 1 crosses the input level of the second signal VIN 2. Hence, the circuit 20 acts as a comparator. Furthermore, the circuit 20 is an adequate comparator element for A/D conversion. For instance, the circuit 20 may be part of an ADC in which it is used at the input stage. Using the circuit 20 for A/D conversion typically comprises connecting the first input (VIN 1) of the circuit 20 to the analog input signal that is to be converted, and connecting the second input (VIN 2) of the circuit 20 to a monotonically increasing ramp signal. By way of the functioning of the circuit 20 as explained before, the output signal VOUT is ascertained a HIGH value as long as the currently received amplitude of the ramp signal is lower than the level of the first input signal at VIN 1, but will rapidly transition to a LOW value the moment the received amplitude of the ramp signal crosses the amplitude of the presented analog input signal at VIN 1. The exact transition time is image sensor design and technology-dependent, but is generally limited to a few tens of nanoseconds for short local column busses with limited capacitance values and up to a few hundreds of nanoseconds for more extended column busses, e.g. full array height, with more important capacitance values. The rapid transition (toggle event) in the output signal VOUT generated by the circuit 20 may be detected by a signal controlling unit of the ADC which uses the circuit 20 as a comparator at its input. The time that has elapsed between the start of the ramping portion of the second input signal at VIN 2 and the toggling event in the comparator output may be measured and quantified by means of a timer unit of the ADC, such as an oscillator with predetermined oscillation frequency or a counter triggered by a clock signal, and the signal controlling unit of the ADC is configured for converting the measured time interval into a corresponding (voltage) signal level based on a given start value and slope value in the ramped signal portion received at VIN 2. The so obtained signal level represents the signal level at the moment the two input signals supplied to the inputs VIN 1 and VIN 2 of the circuit 20 crossed one another, thereby determining the signal level of the analog signal received at VIN 1 for being A/D converted. In preferred embodiments, the timer unit and the signal controlling unit of the ADC are combined into a single functional unit, which also generates the ramped signal portions. In such embodiments, a ramp signal generating unit may comprise a digital counter to increment or decrement the generated output signal in small steps, e.g. in signal steps which are much smaller than the maximally obtainable ramped signal difference in the generated output signal. Therefore, the step size of increments is defined by the maximally obtainable output voltage swing of the ramp signal generating unit and the bit-resolution of the digital counter. As the generated ramp signal is ramped up or down in well-controlled discrete steps, the number of consecutive steps until the moment of signal cross-over between the ramped signal as a reference and the analog signal that is to be compared to the reference, is immediately available to the ramp signal generating unit in binary-encoded format. In consequence, also the binary representation of the applied analog signal is readily available to the ramp signal generating unit.

Referring now to FIG 3, one way of implementing the circuit 20 of FIG 2 as a shared-pixel circuit 30 within the active-pixel matrix of an image sensor is explained. The skilled person will appreciate that this implementation does not necessarily require the addition of new active hardware elements, such as controlled transistors or switches, or passive elements, such as capacitances or resistances, into the single pixel cells of which the shared circuit 30 is composed. For example, the shared-pixel circuit 30 depicted in FIG 3 is composed of two single pixel cells 31, 32, each cell being of the 4T-type as previously described in relation to FIG 1. The two pixel cells 31, 32 are typically arranged in a same column of an arrayed image sensor comprising the circuit 30. However, embodiments of the invention are not limited to pixel cells 31, 32 being direct neighbors in a vertical direction (e.g. column direction) of the image sensor, but may be separated by one or more intermediate pixel cells. For example, the two pixel cells 31, 32 may correspond to pixels in a same column of an image sensors and having a same associated color, e.g. being provided with a same color filter (e.g. red, blue, or green filter) overlaying at least the photosensitive area of the pixel, e.g. at least the respective photosensitive elements PPD1, PPD2. The two pixel cells 31, 32 forming the shared-pixel circuit 30 may then be separated by one or more pixels having a different associated color. It is noted that color filters overlaying the photosensitive pixel area do not impact the correct functioning of the shared-pixel circuit and that, therefore, the two pixel cells 31, 32 may correspond to pixels of an image sensors associated with a different color.

In contrast to conventional 4T-pixel cells, the output terminals of the amplification transistor SF1, SF2 in FIG 3 are not directly connected to the vertical column bus associated with the pixel cells 31, 32, but are connected to each other instead, e.g. by a connector 34, e.g. a wire connection or wire trace. A current source, for instance - but not limited thereto - an external current source "I" (external indicated by dotted lines in FIG 3) located outside the pixel cells 31, 32, e.g. on a periphery of an image sensor comprising the circuit 30, is connected or operatively connectable to a common potential node VB located on the common connector 34, to provide a bias current to the source terminals of the amplification transistors SF1, SF2. The common potential node VB is configured for receiving the bias current of the current source. When the shared-pixel circuit is in use, the potential established at the common potential node VB in response to the received bias current constitutes a reference potential for the two branches of the differential amplifier at the branching point. By coupling (directly or indirectly) the source terminals of the amplification transistors SF1, SF2 to the common potential node VB, their potentials are tied to the potential at the node VB and are substantially equal. Moreover, the output terminal, e.g. the drain terminal, of each of the two selection transistors RS1, RS2 is no longer connected to power supply, e.g. to the VDD power supply line as shown in FIG 1; instead, the output terminal of each of the two selection transistors RS1, RS2 is connected to a different column bus 331, 332 via a respective output connector 361, 362. The two column busses form a dual column bus 33, to which the two single pixel cells 31, 32 are connectable via the respective selection transistor RS1 and RS2.

By close comparison with the circuit 20 depicted in FIG 2, the similarly structured comparator structure that is present in the shared-pixel circuit 30 becomes apparent. As a matter of fact, the two source-connected amplification transistors SF1 and SF2, located in the respective single pixel cells 31 and 32, are forming the input pair of such a comparator and are part of the left branch and right branch, respectively. It is noted that the symmetrical design of the single pixel cells 31, 32 (in fact a repeated unit cell of an arrayed image sensor) makes no clear distinction between a left and a right branch of the comparator and that, as a consequence thereof, either one of the two branches defined by the amplification transistors SF1 and SF2 may be considered to act as the left or right branch indifferently. Preferably, the loads in each branch of the comparator, e.g. the loads R1 and R2 in FIG 2, are located outside the two single pixel cells 31, 32, e.g. at the periphery of the pixel array in an image sensor comprising the circuit 30, to provide more compact pixel cells with a higher obtainable fill factor. For instance, the loads R1 and R2 may be located outside an array of pixel cells in an arrayed image sensor comprising at least one shared-pixel circuit, but on a same chip. Alternatively, the loads R1 and R2 may be located outside the array of pixel cells, but on a different chip, e.g. in a stacked wafer process. Despite the fact that the loads R1 and R2 may be located outside an array of pixel cells, they may still be related to this array, e.g. by associating load pairs R1, R2 with corresponding columns of pixel cells of the array. This is also advantageous in respect of uniformity of the loads across all the pixel cells of a same column of an image sensor because the loads are then common to and shared by all these pixel cells in the same column.

However, embodiments of the invention are not limited to load configurations that are outside the two pixel cells, or even outside the pixel array of an image sensor. In some embodiments of the invention, for example, the pair of loads may be provided inside the pixel cells 31, 32. More specifically, a first load R1 may be connected between the output terminal (e.g. drain) of the first selection transistor RS1 of the first cell 31 and a suitable power source, e.g. a supply line, e.g. VDD, whereas a second load R2 may be connected between the output terminal (e.g. drain) of the second selection transistor RS2 of the second cell 32 and the same power source, e.g. the same supply line, e.g. VDD. Loads inside or outside the single pixel cells may be implemented as resistors or voltage-controlled resistances, e.g. as voltage-controlled resistances of a load transistor. In any case, for the comparator to be operable, the two selection transistors RS1 and RS2 in each of the two comparator branches are switched into their conductive states, e.g. by synchronously applying identical row-select signals "VRS1" and "VRS2" to the gate terminals of the transistors RS1 and RS2.

Embodiments of the invention are also not limited to external current sources "I" which provide a bias current to the source terminals of the amplification transistors of the two pixel cells forming a shared-pixel circuit. As an alternative to a current source located outside the pixel cells 31, 32, e.g. on a periphery of an image sensor comprising the circuit 30, e.g. a current source corresponding to one or more columns, the current source may be provided inside the shared-pixel circuit, for instance in only one of the two pixel cells 31, 32, or in both pixel cells 31, 32. Besides, the current source may be located on the same chip, e.g. pixel substrate, as the pixel cells, or an a different chip, e.g. logic substrate in a stacked image sensor design, regardless of which one of the above-mentioned alternative embodiments is implemented. Typically, the current source(s) "I" provide a bias current of the order of a few microampere per pixel cell column, which for, for instance, a power supply at 3,3 V results in a power supply capability of the order of tens of microwatt.

Moreover, each of the two column busses 331, 332 is adapted for receiving and transmitting a digital output signal of the shared-pixel circuit 30, provided that the two selection transistors RS1, RS2 are conducting. For example, complementary generated bi-stable comparator outputs are supplied to respective column busses 331, 332 via the corresponding output connector 361, 362, provided that the two selection transistors RS1, RS2 are conducting. Besides, an analog signal having a ramped signal portion constitutes a control signal "VRD1" or "VRD2", which is applicable to the respective output terminal (e.g. drain terminals) of the reset transistors RST1, RST2 in each cell 31, 32. Control signals "VRST1" and "VRST2" for selectively opening and closing the reset transistors RST1 and RST2 respectively and independently from each other, are provided to the gate terminals of the reset transistors RST1 and RST2 in both cells 31, 32. An open reset transistor RST1 or RST2 admits propagation of the corresponding analog signal VRD1 or VRD2 to the charge storage areas, e.g. capacitive element FD1 or FD2, of the respective single pixel cell 31, 32, and effectively leads to the adaption to the analog signal level as received by the corresponding element FD1 or FD2, where it can be readily sensed by the amplification transistor SF1 or SF2. For the purpose of digitizing the sensed pixel charge, the first or second sensing signal is present on the capacitive element FD1, FD2 of one cell of the pair of single pixel cells 31, 32 (e.g. a stored charge creating a voltage signal that is sensed) and provides the first input signal to the comparator comprising the two amplification transistors SF1 and SF2 in each one of its branches. The reset transistor of the pixel cell providing this first input signal is closed during the comparison, preventing propagation of the corresponding analog signal VRD1 or VRD2 to the capacitive element. This first input signal (also analog) is compared to a second input signal to produce a digital (e.g. two-valued) output signal of the comparator for transfer onto the dual column bus 33. The second input signal is the analog signal with the ramped signal portion that is gated onto the capacitive element FD2, FD1 of the other one cell of the pair of single pixel cells 31, 32 while the corresponding reset transistor (RST1 or RST2, as the case may be) stays open. Therefore, only one of the pair of reset transistors RST1 and RST2 is open during signal comparison, the other one remaining closed. Throughout the whole signal comparison step, both selection transistors RS1, RS2 are set active. In the same fashion, also a residual charge/reset noise can be sensed and compared to the ramped signal portion of the analog signal in the context of CDS.

The modifications to the single pixel cells 31, 32 in this particular embodiment are indeed limited to the added interconnection 34 between the two cells 31, 32, to the added second column bus line to form a dual column bus 33, and to the new way of operating the single cells to achieve comparison of two input signals (e.g. the timed control sequences for the 2 x 4 transistors). No additional hardware elements are required for this achievement.

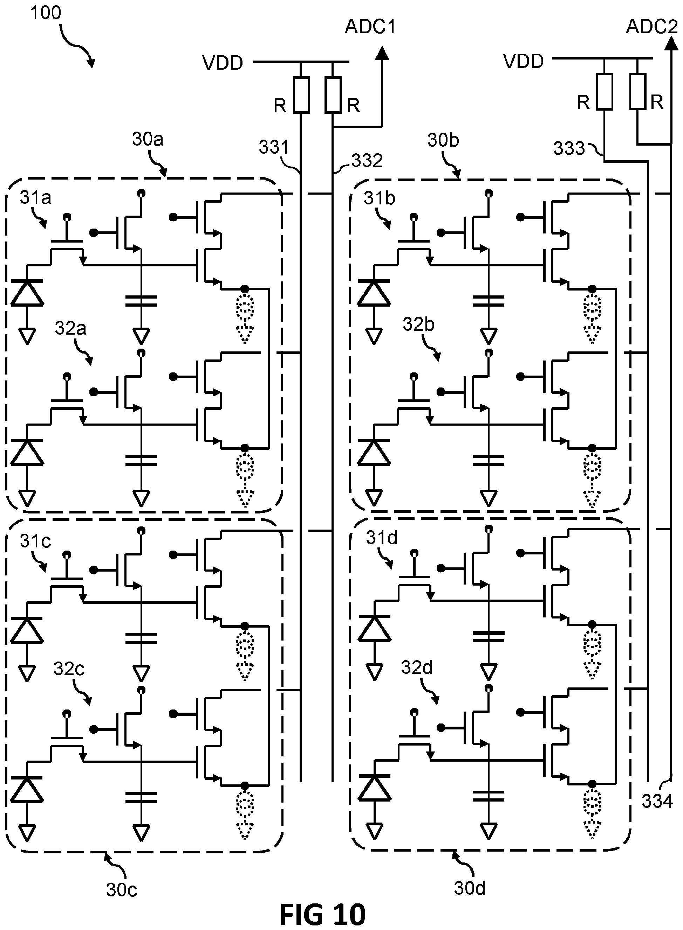

Referring briefly to FIG 10, a portion of an image sensor 100 is shown which comprises a plurality of pixel cells 31a-31d, 32a-32d arranged into rows and columns of an array. The pixel cells 31a-31d, 32a-32d are of the same type as described before for the embodiment of FIG 3. Within each column of pixel cells of the image sensor 100, every second pixel cell is combined and interconnected to the preceding pixel cell of that same columns to form a distinct shared-pixel circuit. For instance, every second pixel cell 32a, 32c of the first column is combined and interconnected to the preceding pixel cell 31a, 31c of the first column to form distinct shared-pixel circuits 30a and 30c. Likewise, every second pixel cell 32b, 32d of the second column is combined and interconnected to the preceding pixel cell 31b, 31d of the second column to form distinct shared-pixel circuits 30b and 30d. Output connectors relay the bi-stable outputs of each shared-pixel differential amplifier to a column bus associated with that shared-pixel circuit. For instance, shared-pixel circuits 30a, 30c are located in the same first column of image sensor 100 and associated with the same dual column bus 331, 332. The first pixel cells 31a, 31c of each shared-pixel circuit 30a, 30c of the first column are connected to the second bus line 332, the second pixel cells 32a, 32c of each shared-pixel circuit 30a, 30c to the first bus line 331 of the first dual column bus. Likewise, shared-pixel circuits 30b, 30d are located in the same second column of image sensor 100 and associated with the same dual column bus 333, 334., with the first pixel cells 31b, 31d of each shared-pixel circuit 30b, 30d of the second column being connected to the second bus line 334, and the second pixel cells 32b, 32d to the first bus line 333 of the second dual column bus. Load pairs of identical loads R are provided at an end portion of each dual column bus of the image sensor 100 and are connected between this end portion and a power supply line VDD. This sharing of load pairs among shared-pixel circuits of a same column has the advantage of saving silicon area in each pixel cell and further ensures good uniformity of load values along columns of the image sensor. Besides, one ADC, e.g. ADC1 and ADC2, is provided per column of the image sensor 100 and adapted for receiving the bi-stable, e.g. digital, output signals generated by the differential amplifiers of the shared-pixel circuits arranged in the corresponding column. These ADCs do not require a comparator unit as this unit is already implemented in the shared-pixel circuits of the pixel cell array.

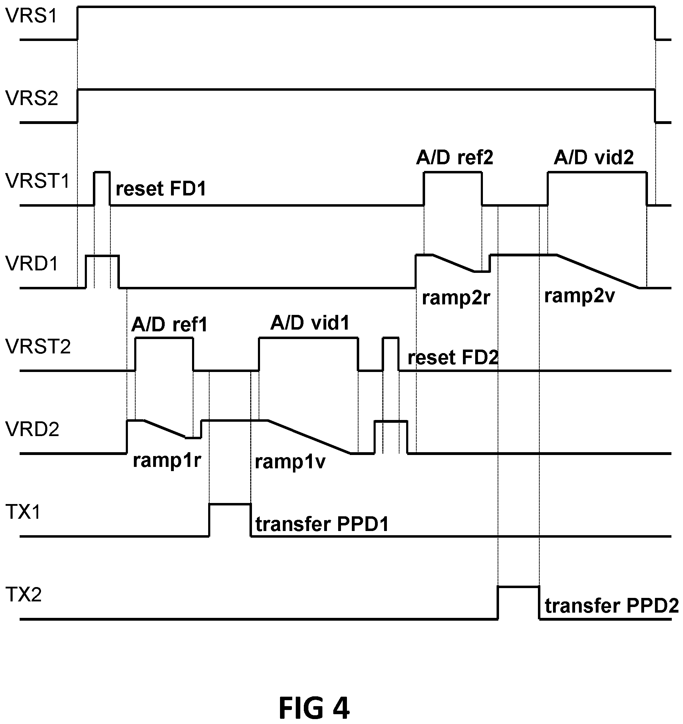

With reference to FIG 4, a method for reading out the charge accumulated by a pixel cell during exposure is now explained, wherein the readout method uses the comparator structure comprised by the shared-pixel circuit 30 described with respect to the embodiment of FIG 3. More specifically, FIG 4 shows a timing diagram for the various control signals applied to the transistors of the shared-pixel circuit 30. The first half of the timing diagram deals with the readout of the first pixel cell 31, whereas the second half of the timing diagram (to the right) repeats the readout steps for the second pixel cell 32.

According to the diagram of FIG 4, the readout of the first pixel cell 31 starts at the end of the integration period, when the two single pixel cells are selected for the dynamic formation of the shared-pixel comparator by raising both VRS1 and VRS2 to a HIGH level. This activates the two selection switches RS1, RS2. Next the capacitive element FD1 of single pixel cell 31, e.g. the floating diffusion, is being reset by activating the reset transistor RST1 with a HIGH voltage on VRST1 and by also bringing VRD1 to a HIGH voltage level. Capacitive element FD1 is reset in response to a high voltage present on VRD1. After the reset action on capacitive element FD1, the resulting voltage thereon is read out to obtain a reference signal as a first sample of CDS. To allow the second pixel cell 32 to cooperate with the first pixel cell 31 in providing the comparator functionality, the second reset transistor RST2 is switched into active mode by the control signal VRST2 steering to HIGH voltage level so that the voltage signal on VRD2 is directed to the gate terminal of the amplification transistor SF2. This is followed by the application of a ramped signal portion ramp1r as part of the A/D conversion step on VRD2, and hence also on the gate terminal of amplification transistor SF2. A short ramp, e.g. not descending all the way to LOW signal level, is generally sufficient to establish the small amplitude reference signal for CDS. This also allows for faster frame rates. The ramp reaching a minimum value, all subsequent A/D conversion steps are performed with respect to the remaining, not yet converted pixel cells belonging to the same row of pixel cells as the first pixel cell 31, and then, the accumulated photocharge signal, e.g. video signal, for the first pixel cell 31 is to be converted in the following steps. This is achieved by first restoring VRD2 to logical HIGH and then de-activating the second reset transistor RST2 by setting VRST2 back to LOW. Next, TX1 is briefly set HIGH to activate the transfer transistor 351 of the first cell 31 and initiate transfer of the accumulated photocharges from the photosensitive element PPD1 to the capacitive element FD1, followed by the A/D conversion of the photocharge signal by the comparator of the shared-pixel circuit 30 as a second part of CDS. This is done by first raising HIGH the control voltage at VRST2 to re-activate reset transistor RST2. Next, an analog voltage signal comprising a ramped signal portion ramplv is applied at VRD2 to force a ramp voltage also on the gate terminal of the second amplification transistor SF2, e.g. a full-swing ramp voltage to take into account the larger signal levels of the video signal obtained for the first pixel cell 31. When the ramped signal portion ramplv has reached its lowest value, the reset transistor RST2 is switched off again by setting VRST2 to LOW, and the single pixel cell 31 completes the readout cycle. Thereafter, the first pixel cell 31 is ready for a new exposure cycle.

The above-described steps for performing readout of the first cell 31 are now repeated in an analogous manner for the readout of the second pixel cell 32 by interchanging the respective roles of the transistors in the first and the second cell 31, 32. This means the following steps are performed. If not maintained in their open configuration, the two selection switches RS1, RS2 are activated again by raising both VRS1 and VRS2 to a HIGH level, whereby the two single pixel cells 31, 32 are selected for the dynamic formation of the shared-pixel comparator. Thereafter, the capacitive element FD2 of single pixel cell 32, e.g. the floating diffusion, is being reset by activating the reset transistor RST2 with a HIGH voltage on VRST2 and by also bringing VRD2 to a HIGH voltage level. Capacitive element FD2 is reset in response to a high voltage present on VRD2. After the reset action on capacitive element FD2, the resulting voltage thereon is read out to obtain a reference signal as a first sample of CDS with respect to the second cell 32. To allow the first pixel cell 31 to co-operate with the second pixel cell 32 in providing the comparator functionality, the first reset transistor RST1 is switched into active mode by the control signal VRST1 steering to HIGH voltage level so that the voltage signal on VRD1 is directed to the gate terminal of the amplification transistor SF1. This is followed by the application of a ramped signal portion ramp2r as part of the A/D conversion step on VRD1, and hence also forced on the gate terminal of amplification transistor SF1. The ramp ramp2r reaching a minimum value, all subsequent A/D conversion steps are performed and the accumulated photocharge signal, e.g. video signal, for the second pixel cell 32 is to be converted in the following steps. This is achieved by first restoring VRD1 to logical HIGH and then de-activating the first reset transistor RST1 by setting VRST1 back to LOW. Next, TX2 is briefly set HIGH to activate the transfer transistor 352 of the second cell 32 and initiate transfer of the accumulated photocharges from the photosensitive element PPD2 to the capacitive element FD2, followed by the A/D conversion of the photocharge signal by the comparator of the shared-pixel circuit 30 as a second part of CDS. This is done by first raising HIGH the control voltage at VRST1 to re-activate reset transistor RST1. Next, an analog voltage signal comprising a ramped signal portion ramp2v is applied at VRD1 to force a ramp voltage also on the gate terminal of the first amplification transistor SF1, e.g. a full-swing ramp voltage to take into account the larger signal levels of the video signal obtained for the second pixel cell 32. When the ramped signal portion ramp2v has reached its lowest value, the reset transistor RST1 is switched off again by setting VRST1 to LOW, and the single pixel cell 32 completes the readout cycle. Thereafter, the second pixel cell 32 is ready for a new exposure cycle. Eventually, both selection switches RS1 and RS2 can be switched off again.

The readout method as explained with reference to FIG 4 also performs CDS. However, this is only an optional step and embodiments of the invention may acquire only one sample for the video signal (accumulated charge) that is sensed and compared for digitization, not taking into account the residual charges on the capacitive elements prior to charge transfer from the photosensitive elements. Moreover, the two pixel cells are read out consecutively in the method described above. This is no requirement, however, and the two pixel cells may be read out with a time interval between the readout of the first pixel cell and the later readout of the second pixel cell. Different pixel cells, other than the first and the second pixel cell, may be read out during that interval. This may be the case for interlaced image sensors for example, in which the first pixel cell and the second pixel cell are associated with different fields. Other examples include subsampling in image sensors with selectable resolution and sequential colour sampling in multi-colour sensing imagers.

The readout method as explained with reference to FIG 4 may also be adapted to perform correlated multiple sampling (CMS). For CMS, the reset level is read out and converted multiple times before a transfer of photogenerated charges to the charge storage area takes place. This is followed by reading out and converting the photocharge signal level multiple times. Implementing the readout method in a manner to include CMS has the additional advantage that temporal noise generated by the readout circuit can be further reduced.

The readout method for a shared-pixel circuit according to embodiments of the invention may correspond to the rolling shutter mode of an image sensor comprising the shared-pixel circuit, or may correspond to the global shutter mode of an image sensor. For the former the exposure cycles for the first and second pixel cell start and end at different moments in time, whereas for the latter the exposure cycles for the first and second pixel cells are synchronized.

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways. The invention is not limited to the disclosed embodiments.

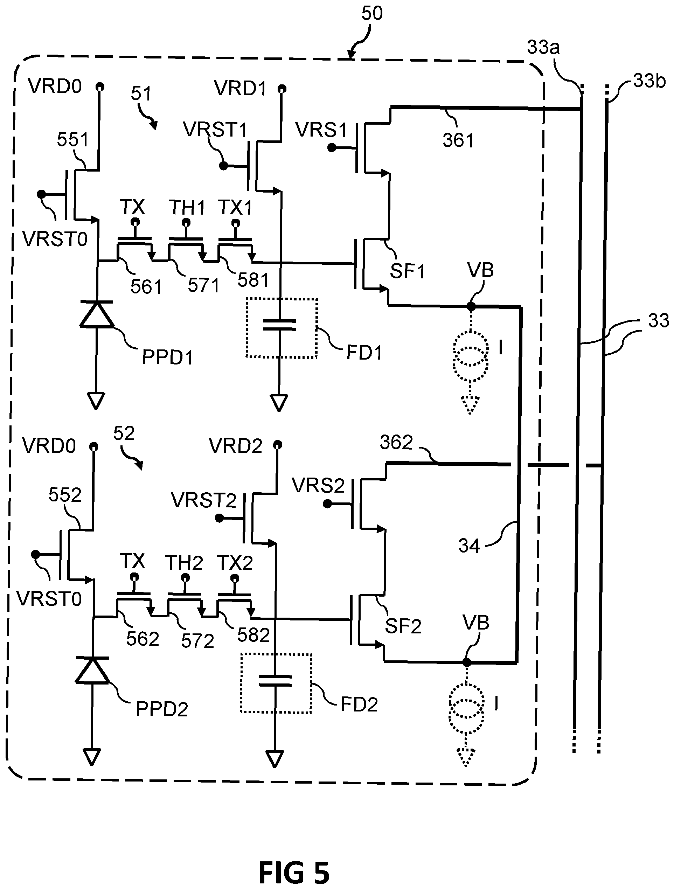

For example, it is possible to conceive of embodiments in which the shared-pixel circuit is implemented based on other single pixel types. In FIG 5, the shared pixel circuit 50 is composed of two single pixel cells 51, 52 of a different type than the 4T-type described hereinabove. The shared pixel circuit 50 depicted in FIG 5 differs from the shared-pixel circuit 30 relating to the embodiment shown in FIG 3 in that the each single pixel cell 51, 52 comprises seven transistors, i.e. three more than in the 4T cells 31, 32 of FIG 3. An additional reset transistor 551, 552 is inserted into each pixel cell 51, 52 for resetting the respective photosensitive elements PPD1, PPD2 of the pixel cell. When the transistors 551, 552 are switched on, the photosensitive elements PPD1, PPD2 are connected to a power supply line VRD0 via the transistors 551 and 552, respectively, and any pre-existing charge on the photosensitive elements PPD1, PPD2 is cleared. Hold transistors 571, 572 in each single pixel cell 51, 52 are connected between a first (global) transfer transistor 561, 562 and a second transfer transistor 581, 582, respectively. The transistors 551, 552 of the pixel cells 51, 52, and in general of each pixel cell of an image sensor comprising the shared-pixel circuit 50, are typically triggered globally by a common control signal "VRST0", e.g. a reset-pulse, preceding the start of a new integration period, which period starts as soon as the transistors 551, 552 are switched off again, e.g. at the end of the reset-pulse of the timed control signal VRST0. Likewise, the transfer transistors 561, 562 are typically operated synchronously and on a global level, e.g. by a time-controlled transfer pulse "TX" sent globally, to ensure accurate transfer of the photogenerated charge, accumulated by the photosensitive elements PPD1, PPD2 during the integration period, on to the respective hold transistors 571, 572 for holding the transferred charge while they are switched on, e.g. being supplied with a HIGH voltage signal "TH1" and "TH2". This first transfer of the photogenerated charge from the photosensitive elements PPD1, PPD2 to the respective hold transistors 571, 572 marks the end of the integration period. In analogy to the transfer transistors 351, 352 of the shared-pixel circuit 30 in FIG 3, the second transfer transistors 581, 582 of each pixel cell 51, 52 are switched on by suitable control signals "TX1" and "TX2" in order to shift the photogenerated charge to the capacitive element FD1, FD2 of each pixel cell 51, 52, e.g. the floating diffusions of each pixel cell. If a charge signal is first sensed and compared for the first pixel cell 51, this means that the control signal TX1 for shifting the photogenerated charges to the capacitive element FD1 is sent before a corresponding control signal TX2 for charge shifting to the capacitive element FD2 is applied with respect to the second cell 52 and the hold transistor 572 of the second cell 52 remains in its on-state during that additional time interval. For the remainder, the sensing of charge signals, residual/thermal noise charge or photogenerated charge, present at each one of the capacitive elements 51, 52 and the comparing with a signal ramp present at the corresponding other one capacitive elements 52, 51 is performed as described previously with reference to FIG 4. Preferably, correlated double sensing (CDS) techniques are used to reduce image noise, but embodiments are not limited thereto. For example, single sensing may be used instead if the image noise is low or can be reduced by other image correction methods.

The shared-pixel circuit 50 in FIG 5 is an exemplary embodiment in which an image sensor with global shutter functionality is desired, e.g. for applications in which fast moving objects are to be imaged and which would otherwise cause significant rolling-shutter artefacts.

In the embodiments described above, further units of an ADC, including a timer unit, a signal control unit and a latch, which together with the comparator of the shared-pixel circuit provide a functional single-slope ADC for A/D conversion of sensed single pixel charges, may be arranged at the periphery of an arrayed image sensor comprising the shared-pixel circuit. For instance, the further units comprised by the ADC may be connectable or permanently connected to an end of each dual column bus. A different ADC may be provided for each pixel column of the image sensor for column-parallel readout of the pixel matrix, or a single ADC may be provided for all the pixel columns of the image sensor for multiplexed serial readout.

Alternatively, a different ADC may be associated with each shared-pixel circuit in an image sensor comprising a plurality of shared-pixel circuits. This enables very fast frame rates and a massively parallel readout of the active-pixel matrix. One ADC per shared-pixel circuit reduced the overall number of ADCs as compared to the case of implementing a per-pixel ADC, which requires less acquisition current and hence less energy. In such embodiments, the further units of the ADC may be provided in a logic substrate that can be stacked with the pixel substrate of the image sensor, the latter already comprising the comparator unit for the ADC input stage. Embodiments of the invention are compatible with a vertical chip stacking technology and the logic substrate may be adhered to the pixel substrate by means of bonding or gluing with an adhesive layer or laminate structure. Through-silicon vias may be used to electrically connect the shared-pixel circuits in the pixel substrate to the further units of each corresponding ADC in the logic substrate, for instance for front-illuminated image sensors. For backside-illuminated image sensors copper-copper direct connections between the pixel and the logic substrate may be formed.

According to some embodiments of the invention, a shared-pixel circuit may comprise more than two single pixel cells, e.g. three, four, or more pixel cells which are arranged to form a larger shared-pixel circuit. Each pixel cell forming part of the larger shared-pixel circuit comprises a distinct photosensitive element, charge storage area, and amplification transistor. Pairs of pixel cells m, n are coupled such that the source terminals of the amplification transistor SFₘ and SFₙ of each pair are connected. Among the many pixel cells of the shared-pixel circuit, any two pixel cells may be selected to form a pair of pixel cells for the purpose of implementing the comparator functionality, e.g. by selecting two such pixel cells by opening their respective selection transistors and keeping the selection transistors of all the other pixel cells of the shared-pixel circuit closed. Typically, a number of pixel cells comprised by the shared-pixel circuit in such embodiments corresponds to a power of two, e.g. two, four, eight, etc., pixel cells. A further advantage of shared-pixel circuits comprising more than two pixel cells that are combinable to form the input pair of a differential amplifier is that an improved redundancy is obtained. If one of the pixel cells were defective (e.g. the first pixel cell), this does not prevent the remaining pixel cells (e.g. second pixel cell and further pixel cell) from participating in the formation of a comparator circuit and from being read out.

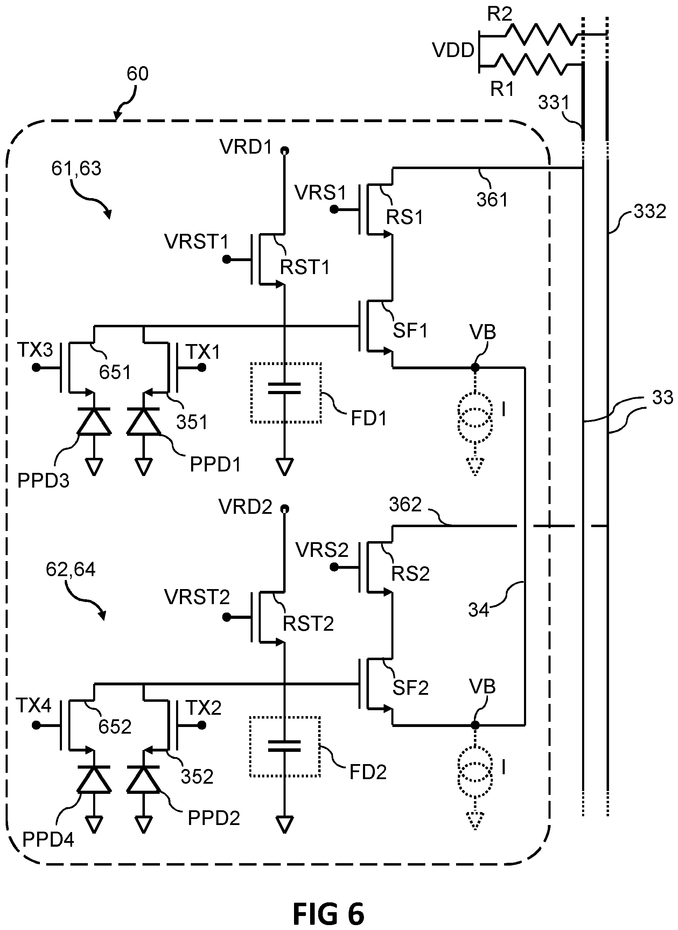

In a variant of the preceding embodiment, a larger shared-pixel circuit comprises more than two single pixel cells, e.g. three, four, or more pixel cells, but a plurality of pixel cells forming part of the larger shared-pixel circuit are configured for sharing a common charge storage area and a common amplification transistor. Multiple pairs of pixel cells m, n are again coupled such that the source terminals of the amplification transistor SFₘ and SFₙ of that pair are connected. However, among the many pixel cells of the shared-pixel circuit, not any two pixel cells may be selected to form a pair of pixel cells for the purpose of implementing the comparator functionality, but only specific combinations or subsets of two pixel cells may be selected to form a pair of pixel cells implementing the comparator functionality. Typically, a number of pixel cells comprised by the shared-pixel circuit in such embodiments corresponds to a power of two, e.g. two, four, eight, etc., pixel cells. Such a variant is briefly explained in FIG 6.

With reference to FIG 6, a larger shared-pixel circuit 60 comprises four pixel cells 61, 62, 63, 64, each pixel cell comprising an individual photosensitive element PPD1 to PPD4, coupled to a respective transfer transistor 351, 352, 651, 652. However, pixel cells 61, 63 are sharing a common charge storage area, e.g. a common capacitive element FD1 (e.g. common floating diffusion node), and further a common amplification transistor SF1, reset transistor RST1, and selection transistor RS1. The same applies to pixel cells 62, 64. As a result, there are groupings of pixel cells and pixel cells belonging to a different groups can be combined to form a shared-pixel circuit in the sense of providing a comparator functionality. In the present embodiment, a first grouping consists of the two pixel cells 61 and 63, and a second grouping of the pixel cells 62 and 64. Individual pixel cells 61 to 64 can still be addressed and read out by only opening one of the transfer transistors of each grouping of pixel cells at a time. However, simultaneously activating the transfer transistors 351, 651 of the first grouping or transfer transistors 352, 652 of the second grouping allows for the binning of pixel cells in the charge domain, i.e. photosensitive elements of a grouping of pixel cells are connected in parallel to a common charge storage area and are sensed by a common amplification transistor. Moreover, the following combinations of pixel cells for forming the input pair of a differential amplifier are possible in the present embodiment: combining pixel cells 61 and 62 to form a first input pair of a differential amplifier, combining pixel cells 61 and 64 to form a second input pair of a differential amplifier, combining pixel cells 63 and 62 to form a third input pair of a differential amplifier, combining pixel cells 63 and 64 to form a fourth input pair of a differential amplifier.

According to some embodiments of the invention, the capacitive element of a single pixel cell, e.g. a floating diffusion, may thus be common and shared amongst a plurality of pixel cells, e.g. amongst pixel cells associated with different fields in an interlaced image sensor or associated with different color filters in an image sensor with color mask. Sharing the capacitive element can be advantageous in terms of higher fill factors. Of course, no two pixel cells assigned to a same shared-pixel circuit are allowed to share their capacitive element if they are both selected to form a comparator. Non-selected pixel cells also assigned to the same shared-pixel circuit may not necessarily excluded from participating in the sharing of their capacitive elements.

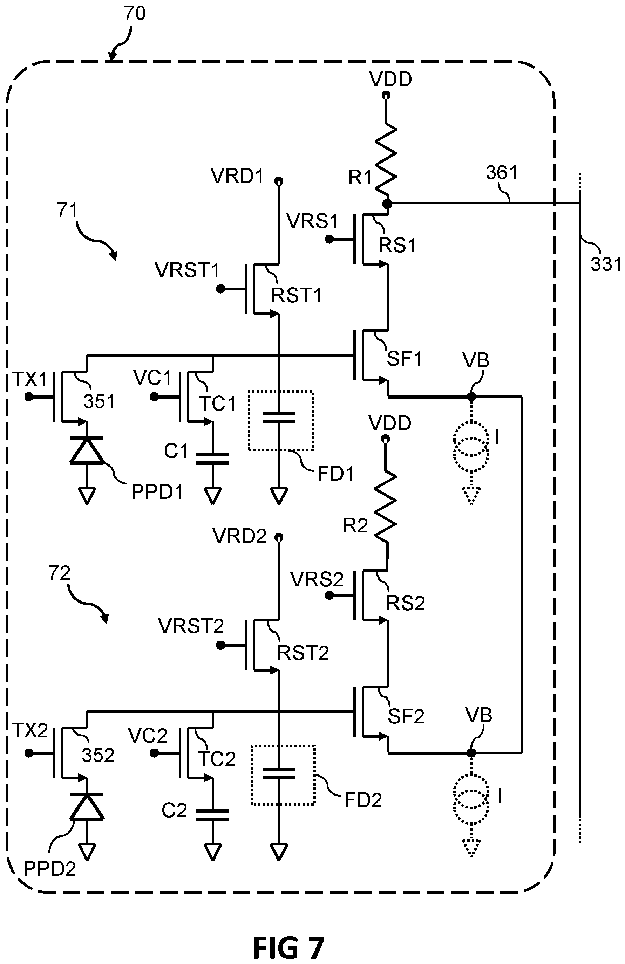

According to some embodiments of the invention, a charge storage area of each single pixel cell may be selectively increased or decreased by selectively connecting/disconnecting a further capacitive element, e.g. an additional capacitor, to that pixel cell. For instance, a further capacitive element, e.g. an additional capacitor, may be selectively connectable to/from a second main terminal of the transfer transistor of the pixel cell via an electronic switch, e.g. via a further transistor. This has the advantage that an excess of photogenerated charge carriers, which would otherwise exceed the storage capacity of the charge storage area, can now be dealt with by switching in an additional capacitive element for storage of the excess charge. For such embodiments it is thus possible to increase the dynamic range of the pixel cell, and the image sensor as a whole, by providing means for gain switching, e.g. for selectively switching between high gain, e.g. analog gain, and low gain, e.g. analog gain. An exemplary embodiment thereof is shown in FIG 7. The shared-pixel circuit 70 comprises two pixel cells 71, 72, which both comprise an additional capacitive element C1 and C2 respectively. The additional capacitive elements C1, C2 can be selectively coupled to the drain terminals of the respective transfer transistors 351, 352 via corresponding switches (e.g. transistors) TC1 and TC2, when receiving adequate control signals VC1, VC2 at their respective control terminals. Charges stored on the additional capacitive elements C1 and C2 can be cleared by the action of the reset transistors RST1 and RST2, e.g. when they are opened. Besides, the shared-pixel circuit 70 of FIG 7 shows an example of a load pair R1, R2 (e.g. two resistors) which is provided inside the two pixel cells 71, 72. Furthermore, only a single column bus 331 is associated with the two pixel cells 71, 72, only the first pixel cell 71 being connected to the single column bus 331 by connector 361.

According to some embodiments of the invention, the order of connecting the amplification transistor SF to the selection transistor RS in the branches of the shared-circuit comparator may be reversed, e.g. the sources of the selection transistors RS1 and RS2 are connected together.

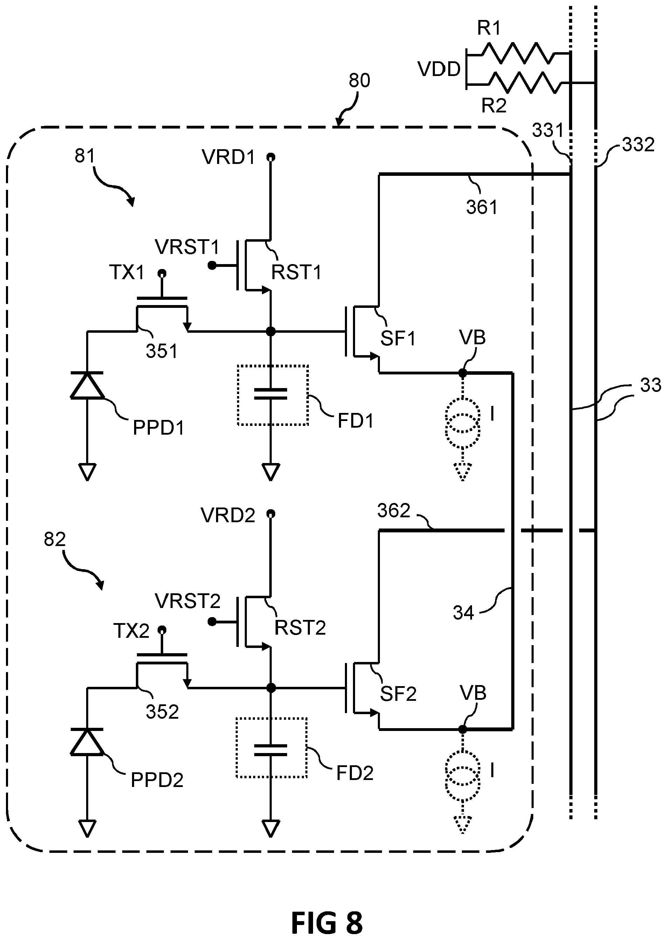

In yet an alternative embodiment, the selection transistors RS1 and RS2 may be entirely dispensed with, provided that clocking of the reset transistors RST1 and RST2 obeys a specific clocking scheme. This is illustrated in FIG 8, in which the two pixel cells 81, 82 of a shared-pixel circuit 80 are the same as the two pixel cells 31, 32 of the embodiment referred to in FIG 3, except that the selection transistors RS1 and RS2 have been removed.

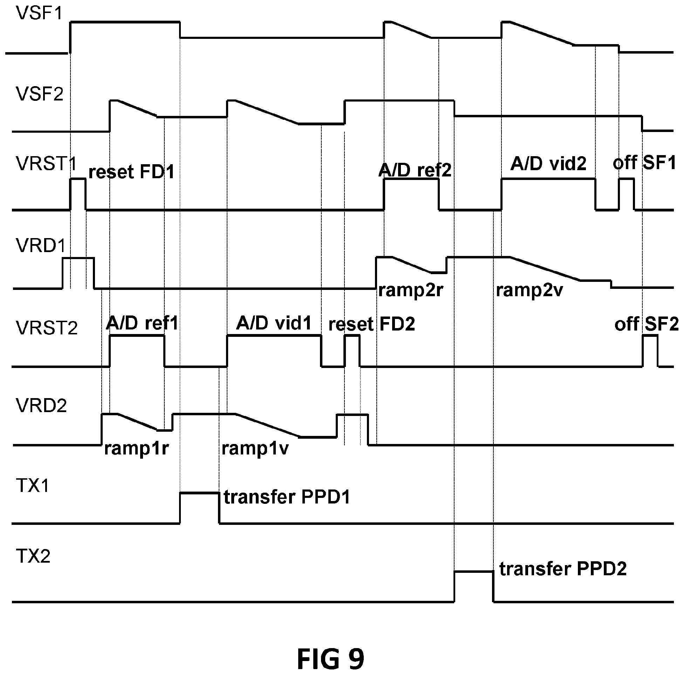

FIG 9 illustrates the timing diagrams for the control signals and differential amplifier input signals involved when digitizing readout signals of the pixel cells 81, 82 of FIG 8. The timing diagrams are similar to the one described previously in relation to the readout method presented in FIG 4. However, the two control signals VRS1, VRS2 are no longer supplied in the absence of the selection transistors RS1, RS2. Instead, the time-evolution of the input signals VSF1, VSF2 to the amplification transistors SF1, SF2 of the differential amplifier are shown in FIG 9. It can be seen that the input signals VSF1, VSF2 follow the analog ramp signal, respectively the sensing signal indicative of the transferred and stored photocharge (transferred during the time interval in which TX1 and TX2 are kept at a logic HIGH level). The input signals remain at the signal level which has been applied at the moment in time the reset transistors close, e.g. VRST1 going to LOW each time the A/D ref 2 and vid2 pulses have been received (and idem for VRST2), or at the signal level which has been applied at the moment in time the charge transfer has been completed and the transfer transistor closes, e.g. when TX1, TX2 pulses have passed. It is important to functionally decouple or render quite the output signal contributions to the column bus 33 by the differential amplifier formed by the two pixel cells 81, 82, as otherwise, there would be readout interference between different rows of pixel cells in the image sensor. In FIG 3 the decoupling is achieved by closing the selection switches RS1 and RS2. In the embodiment referred to in FIGS 8 and 9, this is achieved by asserting a logic LOW level for the two input signals VSF1, VSF2 at the end of the readout method, whereby the amplification transistors SF1 and SF2 are both switched off, effectively decoupling the two pixel cells 81, 82 from the dual column bus 33. By way of example, two short off pulses "off SF1" and "off SF2" in the control signals VRST1 and VRST2 are delivered to the reset transistors RST1 and RST2 respectively, once the bi-stable output signals for the first and second pixel cell 81, 82 have been generated. The signals VRD1 and VRD2 applied to the main terminals of the reset transistors RST1 and RST2 are kept at a logic LOW level while the off pulses "off SF1" and "off SF2" are delivered.Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A shared-pixel circuit (30, 50) for use in an image sensor, comprising at least a first pixel cell (31, 51) and a second pixel cell (32, 52), each pixel cell comprising
- a photosensitive element (PPD1, PPD2) for converting incoming photons into charge,
- a charge storage area (FD1, FD2) operatively connectable to the photosensitive element and adapted for receiving and storing the charge accumulated by the photosensitive element, and
- an amplification transistor (SF1, SF2) adapted for receiving sensing signals representative of an amount of charge stored in the charge storage area,
wherein the amplification transistors of the first and second pixel cell are arranged to form an input pair of a differential amplifier, the differential amplifier being configured for
- receiving only one of a first sensing signal, representative of an amount of charge stored in the charge storage area of the first pixel cell, and an analog signal having a ramped signal portion, as a first input signal, and
- receiving a second sensing signal, representative of an amount of charge stored in the charge storage area of the second pixel cell, as a second input signal if a received first input signal corresponds to said analog signal, and receiving said analog signal as a second input signal if a received first input signal corresponds to said first sensing signal,
- comparing the first input signal to the second input signal, and
- generating a bi-stable output signal based on said comparing of said input signals.

2. A shared-pixel circuit according to claim 1, wherein the differential amplifier is composed of two branches and each branch comprises a respective one of the amplification transistors of the first and second pixel cell.

3. A shared-pixel circuit according to claim 2, further comprising a load pair, each load of the load pair being in series connection with, or connectable in series to, a respective one of the amplification transistors in each branch.

4. A shared-pixel circuit according to claim 3, wherein the loads of the load pair are forming part of the first and/or second pixel cell, or wherein, in an array of pixel cells, the loads of the load pair are located outside the first and second pixel cell.

5. A shared-pixel circuit according to any of the previous claims, wherein first main terminals of the amplification transistors (SF1, SF2) are operatively coupled to a common potential node (VB) of the differential amplifier.

6. A shared-pixel circuit according to claim 5, further comprising a connector (34) for directly connecting the first main electrodes of the amplification transistors to the common potential node (VB), or for connecting each one of the first main electrodes of the amplification transistors (SF1, SF2) to the common potential node (VB) via a respective selection transistor (RS1, RS2) of the pixel cell.

7. A shared-pixel circuit according to claim 5 or 6, wherein the common potential node (VB) of the differential amplifier is configured for receiving a bias current (I).

8. A shared-pixel circuit according to any of the previous claims, further comprising at least one transfer transistor (351, 352) arranged between the photosensitive element and the charge storage area of at least one of the first and second pixel cell, the at least one transfer transistor being configured for transferring the accumulated charge from the photosensitive element to the charge storage area when activated.

9. A shared-pixel circuit according to any of the previous claims, further comprising output connectors (361, 362) for applying the generated output of the differential amplifier to a dual column bus (33) of an image sensor.

10. A shared-pixel circuit according to any of the previous claims, comprising one or more further pixel cells, wherein the amplification transistors of a plurality of subsets of two pixel cells of the shared-pixel circuit are arranged to form an input pair of a differential amplifier, said differential amplifier being configured for
- receiving only one of a first sensing signal, representative of an amount of charge stored in the charge storage area of a first one of the two pixel cells associated with the differential amplifier, and an analog signal having a ramped signal portion, as a first input signal, and
- receiving a second sensing signal, representative of an amount of charge stored in the charge storage area of a second one of the two pixel cells associated with the differential amplifier, as second input signal if a received first input signal corresponds to said analog signal, and receiving said analog signal as a second input signal if a received first input signal corresponds to said first sensing signal,
- comparing the first input signal to the second input signal, and
- generating a bi-stable output signal based on said comparing of said input signals.

11. An image sensor comprising a substrate and at least one shared-pixel circuit according to any of the previous claims formed on or in the substrate.

12. An image sensor according to claim 11, the image sensor comprising a plurality of pixel cells and pixel cells of the plurality of pixel cells being arranged in pairs to form a plurality of shared-pixel circuits.

13. An image sensor according to claim 12, wherein the pixel cells are arranged in rows and columns of an array, and wherein a pair of pixel cells forming one of the shared-pixel circuits comprises two adjacent pixel cells in a same column of the array, or comprises two pixel cells in a same column of the array separated by one or more pixel cells of the same column.

14. An image sensor according to any of the claims 11 to 13, further comprising at least one dual column bus for receiving and transmitting bi-stable outputs generated by the differential amplifier of at least one shared-pixel circuit.

15. An image sensor according to any of the claims 11 to 14, wherein the image sensor comprises a plurality of pixel cells arranged into an array, and further a color filter array and/or a microlens array associated with array of pixel cells.

16. An image sensor according to any of the claims 11 to 15, further comprising gain selection means for selecting between a high gain and a low gain.

17. An image sensor according to any of the claims 11 to 16, wherein the image sensor is provided as a vertically stacked image sensor, comprising a logic substrate connected to a pixel substrate, with the at least one shared-pixel circuit being formed in the pixel substrate and signal processing means, for further processing of generated bi-stable output signals of the at least one shared-pixel circuit, being formed on the logic substrate.

18. A method of digitizing readout signals of a pixel cell in an image sensor comprising a plurality of pixel cells, comprising:
- shifting a photogenerated charge accumulated by the pixel cell to a charge storage area of the pixel cell to generate a first sensing signal indicative of the charge accumulated by the pixel cell during exposure,
- forming a differential pair by coupling a main terminal of an amplification transistor of the pixel cell to a corresponding main terminal of an amplification transistor of a further pixel cell of the image sensor,
- supplying the first sensing signal to a control terminal of the amplification transistor of the pixel cell,
- supplying an analog signal to a control terminal of an amplification transistor of the further pixel cell, the analog signal comprising a ramped signal portion,
- recording a moment in time at which a transition in a bi-stable output signal of the differential pair occurs as a result of a level of the supplied analog signal crossing a level of the supplied first sensing signal.

19. A method according to claim 18, further comprising:
- shifting a photogenerated charge accumulated by the further pixel cell to a charge storage area of the further pixel cell to generate a second sensing signal indicative of the charge accumulated by the further pixel cell during exposure,
- supplying the second sensing signal to the control terminal of the amplification transistor of the further pixel cell,
- supplying an analog signal to the control terminal of the amplification transistor of the pixel cell, the analog signal comprising a ramped signal portion,
- recording a moment in time at which a transition in the bi-stable output signal of the differential pair occurs as a result of the level of the supplied analog signal crossing the level of the supplied second sensing signal.

20. A method according to claim 18 or 19, further comprising:
- clearing a charge in the charge storage area of the pixel cell to generate a first reference signal for correlated double sampling,
- supplying the first reference signal to the control terminal of the amplification transistor of the pixel cell,
- supplying an analog signal to the control terminal of the amplification transistor of the further pixel cell, the analog signal comprising a ramped signal portion,
- recording a moment in time at which a transition in a bi-stable output signal of the differential pair occurs as a result of a level of the supplied analog signal crossing a level of the supplied first reference signal.

21. A method according to any of claims 18 to 20, further comprising:
- measuring a time interval lapsed between a start time and the recorded moment in time in respect of one of the transitions in the bi-stable output signal of the differential pair, the start time defining the moment in time the ramped signal portion is supplied to the control terminal of one of the amplification transistors of the differential pair,
- converting the time interval to a bit value, and
- optionally storing the bit value in a storage element of the image sensor.

22. A method according to any of claims 18 to 21, further comprising:
- transmitting the bi-stable output signal of the differential pair on a single column bus or a dual column bus of the image sensor.
